# EUROPEAN PATENT APPLICATION

(11) **EP 2 095 981 A1**
(43) Date of publication of application: **02.09.2009**
(21) Application number: 07832968.7
(22) Date of filing: 03.12.2007
(51) Int. Cl.: B60J 1/00, B60J 1/02, B60S 1/02, C03C 17/25

(54) **VEHICLE WINDOW-USE ANTIFOGGING GLASS, PRODUCTION METHOD THEREOF, AND FIXING STRUCTURE THEREOF**

(30) Priority: 04.12.2006 JP 2006327412
(71) Applicant: Asahi Glass Company, Limited, Chiyoda-ku Tokyo 100-8405 (JP)
(72) Inventor: ISHIOKA, Hideki, Tokyo 100-8405 (JP)
(74) Representative: Müller-Boré & Partner Patentanwälte
(86) International application number: PCT/JP2007/073348
(87) International publication number: WO 2008/069186

(57) **Abstract**

An antifogging glass is provided which has not only an excellent antifogging property but also an excellent appearance and provides an excellent visual effect to an observer.

An antifogging glass for a vehicle window, comprising a glass sheet for a vehicle window and an antifogging film disposed on an interior side of the glass sheet, the glass sheet having a dark concealment region disposed in a band-shape on a peripheral edge portion thereof, and the antifogging film having an edge present in a position closer to a central portion of the glass sheet than an edge of the glass sheet and in the dark concealment region.

## Description

### TECHNICAL FIELD

The present invention relates to an antifogging glass for a vehicle window, a method for producing the same, and a fixing structure for the antifogging glass.

### BACKGROUND ART

Most of window glass sheets for vehicles, such as windshields, have a dull and dark region (dark concealment region) disposed in a peripheral edge portion thereof. A windshield is fixed to a vehicle at a peripheral edge portion thereof by an adhesive, and the bonded portion is concealed by disposing a dark concealment region on the peripheral edge portion. The purposes of the provision of such a dark concealment region on the peripheral edge portion are to improve the appearance of the peripheral edge portion of the windshield so as to provide a better look to the windshield and to allow, e.g. a driver to keep an exterior sight in good manner so as to provide the advantage of reducing visual fatigue. In general, such a dark concealment region is formed of a dull and black paint of ceramics in a band shape having a width of about 5 to 30 cm on the entire peripheral edge portion of a windshield.

As such a dark concealment region in a black band-shape, there are two types of an entirely opaque region and a partly opaque region having, e.g. fading. In the former type, in general, the dark concealment region has a width of about 10 to 60 mm at an upper side of a glass sheet (a side of a glass sheet that is located at an upper position when the glass sheet is assembled to a vehicle) and at lateral sides of the glass sheet (sides of the glass sheet that are located at lateral positions when the glass sheet is assembled to a vehicle), and a width of about 50 to 300 mm at a lower side of the glass sheet (a side of the glass sheet that is located at a lower position when the glass sheet is assembled to a vehicle), although depending on vehicle models, a side of a glass sheet or another factor. In the latter types, a first dark concealment region, which is an entirely opaque region, is disposed on a peripheral portion of a glass sheet, and a second dark concealment region, which has a lower degree of concealment than the first dark concealment region, is disposed inside and adjacent to the first dark concealment region. In the latter case, the first dark concealment region has a width of about 10 to 50 mm at the upper and lateral sides and a width of about 50 to 200 mm at the lower side. The second dark concealment region has a width of about 0.5 to 100 mm, preferably about 1 to 50 mm, and more preferably about 2 to 30 mm.

The second dark concealment region is formed of a decorative pattern in many cases. The second dark concealment region is opaque in 1 to 99% of the entire area thereof in many cases. The provision of the second dark concealment region improves the appearance of a glass sheet, reduces the visual fatigue of a driver or another person and provides a better look to the glass sheet by preventing a case where the boundary between the entirely opaque dark concealment region (the first concealment region) and a transparent region as the main part of the glass sheet is noticeable.

As a glass sheet for a vehicle window with the appearance in the vicinity of a dark concealment region being taken into account, Patent Document 1 proposes a glass sheet for a vehicle window, which includes a solid color of opaque band and a fade-out band extending inwardly therefrom on a peripheral portion thereof with an infrared reflective/absorbing coating applied thereon. This glass sheet for a vehicle window is a windshield that has an edge of the infrared reflective/absorbing coating disposed in the fade-out band for a countermeasure against a visual disturbance or a degradation in the appearance caused by the difference in reflectivity and transmittance between the infrared reflective/absorbing coating film and a transparent region of the glass sheet. When an edge of such an infrared reflective/absorbing coating is disposed in a transparent region of a glass sheet, the appearance of the glass sheet is degraded or the exterior sight through the glass sheet is reduced in some cases. In the proposal disclosed in Patent Document 1, the coating film has the edge disposed in the fade-out band for dealing with the problem in appearance and preventing, e.g. the exterior sight through the glass sheet from degrading.

On the other hand, in the case of a window glass, in particular a window glass for observing the opposite side of the window glass therethrough, an observer, such as a driver, as in a window glass for a vehicle, needs to allow the observer to clearly see an exterior scene therethrough without distortion. However, in the case of the windshield of a vehicle, when a surface of the windshield is exposed to a temperature of not higher than a dew point, being affected by the humidity or a temperature change in the interior or the exterior of the vehicle, dew forms on the surface of the windshield to mist the windshield in some cases. For this reason, normal vehicles are equipped with a warm-air heater or a heating wire in order to remove the mist on a glass sheet or prevent a glass sheet from misting. However, the provision of only such a warm-air heater or a heating wire is insufficient. From this point of view, it has been proposed to dispose an antifogging film on the interior side of a glass sheet so as to prevent the glass sheet from misting. The antifogging film is disposed by coating a thin resin film on the interior side of a glass sheet or applying a surface-active agent on the interior side of a glass sheet.

For example, Patent Document 2 proposes an antifogging glass, which has an antifogging film formed by applying a liquid composition for antifogging containing at least one kind of water-soluble resin selected from the group consisting of polyvinyl alcohol and polycarboxylic acids with an acid value of 600 to 900, an amorphous metal oxide, and a zirconium-based crosslinking agent, and heating the liquid composition. Further, Patent Document 3 discloses an antifogging base material, which comprises a composite water-absorbent film formed from a mixture comprising a polyvinyl acetal resin and a hydrolyzate or partial hydrolyzate of an alkylsilyl isocyanate, and a water-permeable protective film, both films being laminated.
Patent Document 1: JP-A-2002-528374
Patent Document 2: JP-A-2005-330165
Patent Document 3: JP-A-2001-146585

### DISCLOSURE OF THE INVENTION

### PROBLEMS TO BE SOLVED BY THE INVENTION

The prior art disclosed in the above-mentioned Patent Document 1 has raised the problem of a degradation in the appearance of a transparent region of a glass sheet and in exterior sight. However, the appearance of the glass sheet, an ease in exterior sight, visual fatigue and another factor for a driver or another person, which are affected by the luster of a dark concealment region, are not taken into account in this prior art. The inventor has found that even in a case where such a dark concealment region is formed as an dull region, when the dark concealment region contains a section having an antifogging film disposed therein and a section having no antifogging film disposed therein, a noticeable difference in luster is caused in such a manner that an edge of the antifogging film serves as a boundary. It is feared that such a difference in luster leads to the generation of a degradation in the appearance, a degradation in exterior sight, visual fatigue or another problem.

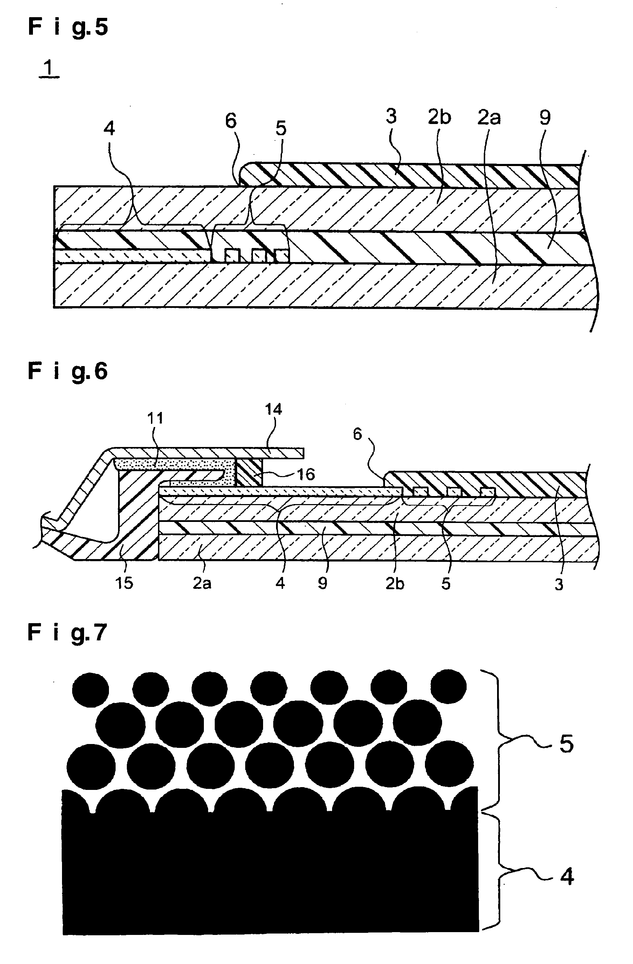

Although the above-mentioned Patent Documents 2 and 3 have proposed that a glass sheet for a vehicle is formed as an antifogging glass, both documents are silent on a specific structure of the antifogging glass. When an antifogging glass is actually utilized on a vehicle or the like, factors of the antifogging glass, such as the durability, the appearance, and the usage characteristics, need to be fully taken into account. In general, a glass sheet for a vehicle has a peripheral edge portion fixed to a window frame of a vehicle by a urethane-based adhesive (see Fig. 6). In this case, when the glass sheet and the adhesive have an antifogging film disposed therebetween, the bonding strength or the durability sometimes becomes insufficient. The antifogging glass is required to have a good appearance and a good visual effect, such as an ease in exterior sight or visibility from the interior of the vehicle therethrough for a driver or another person, and prevention of visual fatigue.

From these points of view, it is an object of the present invention to provide an antifogging glass for a vehicle, a method for producing the same, and a fixing structure for the antifogging glass used in a vehicle, wherein the antifogging glass has not only an excellent antifogging property but also an excellent durability as a glass sheet for a vehicle and is excellent in appearance and visual effect to a driver or another person.

### MEANS TO SOLVE THE PROBLEMS

The inventor has found, based on keen study of how to solve the above-mentioned problems, that the following solution can solve the problem, and have achieved the present invention.
1: An antifogging glass for a vehicle window, comprising a glass sheet for a vehicle window and an antifogging film disposed on an interior side of the glass sheet, the glass sheet having a dark concealment region disposed in a band-shape on a peripheral edge portion thereof, and the antifogging film having an edge present in a position closer to a central portion of the glass sheet than an edge of the glass sheet and in the dark concealment region.
2: The antifogging glass for a vehicle window recited in item 1, wherein the glass sheet for a vehicle window is formed of a single layer glass, and the single layer glass has a dark concealment layer disposed on the peripheral edge portion of the interior side thereof to form the dark concealment region.
3: The antifogging glass for a vehicle window recited in item 1, wherein the glass sheet is formed of a laminated glass including an interior-side glass sheet, an exterior-side glass sheet and an intermediate film disposed between both glass sheets, and the interior-side glass sheet has a dark concealment layer disposed on the interior side thereof to form the dark concealment region.
4: The antifogging glass for a vehicle window recited in any one of items 1 to 3, wherein the edge of the antifogging film is present in a region apart from an edge of the glass sheet toward an inner peripheral direction by a distance of 1/3 or more of the width of the dark concealment region disposed in a band-shape.
5: The antifogging glass for a vehicle window, recited in any one of items 1 to 4, comprising the glass sheet for a vehicle window and the antifogging film disposed on the interior side of the glass sheet, the glass sheet having a first dark concealment region disposed on the peripheral edge portion thereof, and the first dark concealment region having a second dark concealment region disposed on an inner peripheral edge portion of the first dark concealment region, the second dark concealment region having a lower degree of concealment than the first concealment region, and the edge of the antifogging film being present in the second concealment region.
6: The antifogging glass for a vehicle window, recited in item 5, wherein a proportion of an area of an opaque part in the second dark concealment region to an entire area of the second dark concealment region is 1 to 99%.
7: The antifogging glass for a vehicle window, recited in item 5 or 6, wherein a proportion of the area of an opaque part in the second dark concealment region increases toward the first dark concealment region.
8: The antifogging glass for a vehicle window, recited in any one of items 5 to 7, wherein the opaque part in the second dark concealment region is formed of a dot pattern.
9: The antifogging glass for a vehicle window, recited in any one of items 5 to 8, wherein the edge of the antifogging film is present in a region where a proportion of the area of the opaque part in the second dark concealment region is 30 to 80%.
10: The antifogging glass for a vehicle window, recited in any one of items 5 to 9, wherein a proportion of the area of an opaque part in the second dark concealment region is 30 to 80%.
11: The antifogging glass for a vehicle window, recited in any one of items 1 to 10, wherein the antifogging film is a film formed of an antifogging material containing a resin.
12: The antifogging glass for a vehicle window, recited in any one of items 1 to 11, wherein the antifogging film has a film thickness of 5 to 50 µm.
13: A fixing structure for an antifogging glass for a vehicle window, which is adapted to fix an antifogging glass for a vehicle window to the flange of a window aperture in the vehicle through an adhesive, the antifogging glass having a dark concealment region disposed in a band-shape on a peripheral edge portion thereof and an antifogging film disposed on an interior side thereof, the fixing portion being covered with an interior material, the antifogging film having an edge in a position present in the dark conceal region and being not covered with an interior material.
14: The fixing structure for an antifogging glass for a vehicle window recited in Claim 13, wherein the glass sheet has a first dark concealment region disposed on the peripheral edge portion thereof, and the first dark concealment region has a second dark concealment region disposed on an inner peripheral edge portion of the first dark concealment region, the second dark concealment region having a lower degree of concealment than the first concealment region, and the edge of the antifogging film is present in the second concealment region.
15: A method for producing an antifogging glass recited in any one of Claims 1 to 12, comprising disposing a dark concealment region in the peripheral edge portion of the interior side of the glass sheet, and disposing the antifogging film so as to position the edge of the antifogging film in the dark concealment region.

### EFFECTS OF THE INVENTION

In accordance with the present invention, it is possible to provide an antifogging glass for a vehicle, a method for producing the same, and a fixing structure for the glass sheet used in a vehicle, wherein the antifogging glass is excellent in not only an antifogging property but also durability, design and a visual effect (an ease in exterior sight through the glass sheet by an observer, such as a driver or another person, visibility, a reduction in sight fatigue and the like).

### BRIEF DESCRIPTION OF DRAWINGS

Fig. 1 is a partial cross-sectional view showing the antifogging glass for a vehicle window according to an example of the present invention;
Fig. 2 is a front view showing the antifogging glass for a vehicle window according to the example of the present invention;
Fig. 3 is a partial cross-sectional view showing the antifogging glass for a vehicle window according to another example of the present invention;
Figs. 4(A) and 4(B) are a front view showing the glass sheet for a vehicle window having no antifogging film disposed thereon and a front view showing the glass sheet for a vehicle window having an antifogging film disposed thereon;
Fig. 5 is a partial cross-sectional view showing the antifogging glass for a vehicle window according to another example of the present invention;
Fig. 6 is a partial cross-sectional view showing a situation where a glass sheet is bonded to a vehicle;
Fig. 7 is a dot pattern for a second dark concealment region;
Fig. 8 is a partial cross-sectional view showing the antifogging glass for a vehicle window according to another example of the present invention;
Fig. 9 is a partial cross-sectional view showing the antifogging glass for a vehicle window according to another example of the present invention; and
Fig. 10 is a partial cross-sectional view showing the antifogging glass for a vehicle window according to another example of the present invention.

### MEANINGS OF SYMBOLS

- 1 :: Antifogging glass
- 2, 2a and 2b:: Glass sheets
- 3:: Antifogging film
- 4a:: Dark concealment region
- 4:: First dark concealment region
- 5:: Second dark concealment region
- 6:: Edge portion of antifogging film
- 7:: Edge portion of first dark concealment region
- 8:: Edge portion of second dark concealment region
- 9:: Resin layer
- 11:: Urethane adhesive
- 12:: Interior material
- 13:: Edge portion of interior material
- 14:: Flange of window aperture in vehicle

### BEST MODE FOR CARRYING OUT THE INVENTION

The present invention will be more specifically described based on embodiments in reference to the accompanying drawings. It should be noted that the present invention should not be limited to the embodiments, and that modifications and changes may be made in the embodiments without departing the spirit and the scope of the present invention.

The wording "edge" in the present invention means a ridge line that is formed by joining surfaces, and the wording "peripheral edge portion" means a region extending from an edge a glass sheet toward a central portion of the glass sheet and having a certain width. In the present invention, when a glass sheet is seen from a surface side thereof, the direction from the central portion toward the edge of the glass sheet is called an outer peripheral direction, and the direction from the edge toward the central portion of the glass sheet is called an inner peripheral direction. The wording "dark concealment region" in the present invention is referred to a region that is opaque because of the provision of a dark concealment layer when a glass sheet is seen from the front.
The wording "dark concealment layer" means a burned substance of dark ceramic paste. The wording "opaque" covers not only a mode where a dark concealment region is entirely coated with a dark concealment layer so as to be entirely opaque but also a mode where a dark concealment region is partly coated, being provided with a pattern or fading.

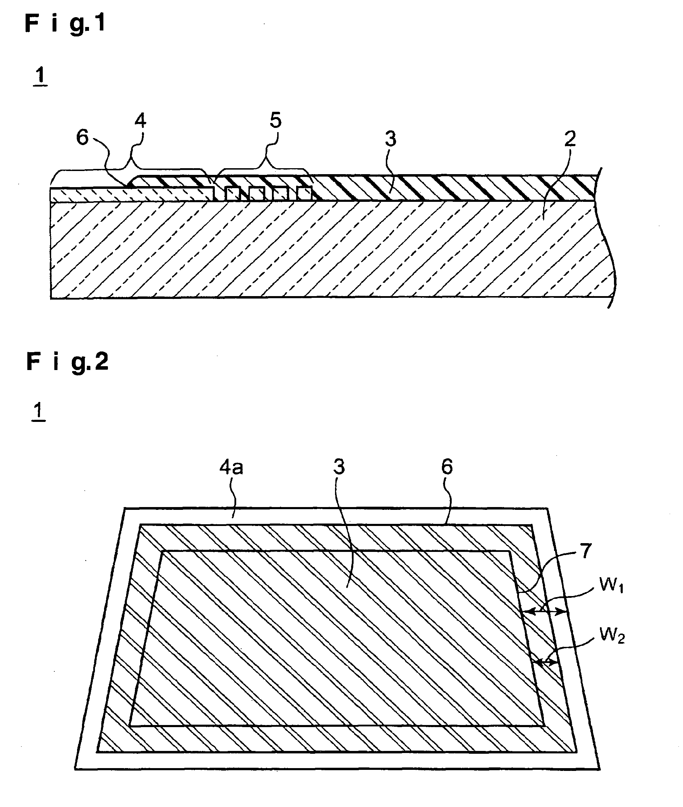

The antifogging glass for a vehicle window according to the present invention (hereinbelow, also referred to the antifogging glass) basically includes a glass sheet for a vehicle window and an antifogging film disposed on an interior side of the glass sheet. As shown in Fig. 1 and Fig. 2, the glass sheet has a dark concealment region disposed in a band-shape on a peripheral edge portion thereof, and the antifogging film is disposed so as to partly coat the dark concealment region at a position closer to the central portion of the glass sheet than an edge portion of the glass sheet without reaching the edge portion. In Fig. 2, reference W₁ designates the width of the dark concealment region, and reference W₂ designates the width of a region where the antifogging film coats the dark concealment region. The dark concealment layer forming the dark concealment region is normally formed of a burned substance of a dull and black ceramic paste. The dark concealment layer may entirely or partly coat a surface of a glass sheet in the dark concealment region. For example, the dark concealment layer may be configured to include a first dark concealment region 4 entirely coating a glass surface in an outer peripheral side thereof and a second dark concealment region 5 partly coating a glass surface in an inner peripheral side thereof as shown in Fig. 1, Fig. 3 and Fig. 4.

The antifogging film is not disposed on the outermost peripheral portion of an antifogging glass (a region of the antifogging glass extending from the edge of the antifogging glass toward the inner peripheral direction and having a narrower width than the width of the dark concealment region). As shown in Fig. 6, the antifogging glass is fixed to a vehicle through a urethane adhesive 11 at the outermost peripheral portion, where it is necessary to prevent the bonded portions from being adversely affected by the antifogging film in terms of adhesion and durability.

When the antifogging glass is assembled to a vehicle, the outermost peripheral portion of the antifogging glass 1 is fixed to the flange 14 of a window aperture in the vehicle through an adhesive, such as the urethane adhesive 11. If the antifogging film 3 is disposed so as to extend to the outermost peripheral portion of the antifogging glass 1, the adhesive strength is likely to decrease, thus reducing the durability, which depends on the material of the antifogging film. From this point of view, the present invention has a structure where the antifogging film is not disposed on the outermost peripheral portion of a glass sheet because this portion is used for disposing an adhesive, such as the urethane adhesive 11.

It is preferred that the edge of the antifogging film be positioned in a region apart from the edge portion of the antifogging glass toward the inner peripheral direction by a distance of 1/3 or more of the width of the dark concealment region. In other words, when the dark concealment region is divided into three equal parts in the width direction, it is preferred that the edge of the antifogging film be not present in a range apart from the edge of the antifogging glass toward the inner peripheral direction by a distance of less than 1/3 of the width of the dark concealment region but be present in a range apart from an inner peripheral edge of the dark concealment region toward the outer peripheral direction by a distance of less than 2/3 of the width of the dark concealment region. Speaking about the specific distance from the edge of the antifogging glass to the edge of the antifogging film, the distance is preferably about 5 mm, more preferably about 10 mm, further preferably about 15 mm at upper and lateral sides of the antifogging glass. The distance is preferably about 10 mm, more preferably about 30 mm, further preferably about 50 mm at a lower side of the antifogging glass.

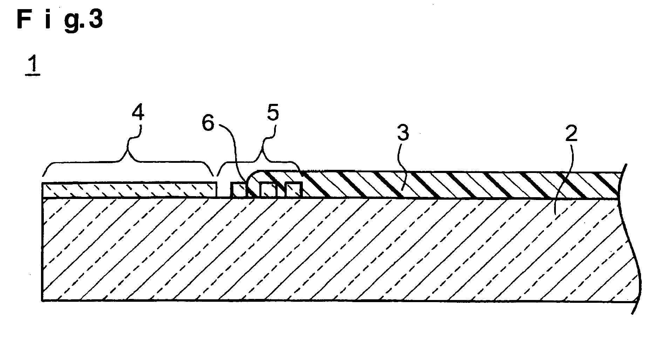

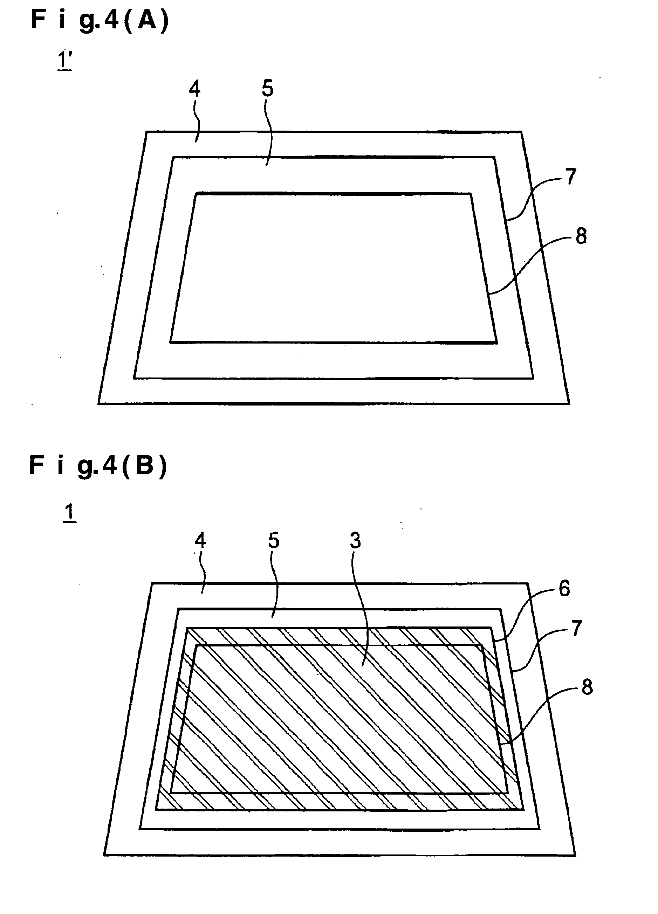

As shown in Fig. 3, the antifogging glass for a vehicle window according to a first embodiment of the present invention is formed of an antifogging glass 1, which includes a first dark concealment region 4 as an entirely opaque layer disposed on a peripheral edge portion of a glass sheet surface and a second dark concealment region 5 disposed on a peripheral edge portion of the glass sheet surface in contact with an inner peripheral edge of the first dark concealment region 4, the second dark concealment region being partly opaque. The antifogging glass 1 has an antifogging film 3 disposed on the surface of the glass sheet 2, the antifogging film having an edge 6 present in the second dark concealment region 5. As shown in the front view of Fig. 4, the first dark concealment region 4 as the opaque layer is disposed on the peripheral edge portion on the surface of the glass sheet 2, and the second dark concealment region 5 is disposed on the surface of the glass sheet in contact with the inner peripheral edge of the first dark concealment region 4. It should be noted that Fig. 4(A) is a front view of the antifogging glass with the antifogging film 3 being omitted for easy understanding, which shows the positional relationship between the first dark concealment region and the second dark concealment region. Fig. 4(B) is a front view of the antifogging glass with the antifogging film 3 being shown therein, which shows the position of the edge 6 of the an antifogging film 3. Although the first dark concealment region 4 may have any width, the width is normally 5 to 300 mm, preferably 10 to 200 mm. The width of the first dark concealment region 4 may be determined so as to improve the appearance of the antifogging glass 1 and may be varied according to the size or the application of the antifogging glass 1.

In a case where the edge 6 of the antifogging film 3 is present in the first dark concealment region 4 as shown in Fig. 1, even when the first dark concealment region 4 is prepared so as to be dull and black, the dark concealment region is made glossy by the antifogging film 3 in some cases. In such cases, the first dark concealment region looks like being divided into a glossy part and a dull part with the edge 6 of the antifogging film 3 in the first dark concealment region serving as the boundary between the two parts.

The dark concealment layer disposed in the first dark concealment region has a low degree of gloss and looks dull because of having a rough surface. On the other hand, it is preferred that the antifogging film be a thick film formed of a material containing a resin and having a thickness of about 1 µm to about tens of µm, which will be described later. In a case where the antifogging film is thin, even when the antifogging film coats the dark concealment region, a change in gloss in a portion where the antifogging film is disposed is small since the surface of the antifogging film has a certain degree of roughness, being reflected by the surface roughness of the dark concealment layer. However, in a case where the antifogging film is thick, the surface roughness of the antifogging film is little affected by the surface roughness of the dark concealment layer. In the latter case, a portion where the antifogging film is disposed has a smoother surface than the surface of the dark concealment layer and is observed as having a high degree of gloss. It is assumed that a difference in gloss is produced with the edge of the antifogging film serving as the boundary for this reason.

Although the antifogging effect is not inhibited even if the difference in gloss is affected by the presence and absence of an antifogging film, the appearance of the antifogging glass is degraded in some cases. From this point of view, in the first embodiment of the present invention, the edge 6 of the antifogging film 3 is present in the second dark concealment region 5 where a difference in gloss is inconspicuous as shown in Figs. 3 and 4.

The second dark concealment region 5 is disposed such that a portion of the glass sheet surface, where the second dark concealment region is disposed, is partly coated with an opaque material without being entirely coated with the opaque material. For example, it is preferred that such a portion of the glass sheet be coated with a material having an opaque dot pattern as shown in Fig. 7.

In a preferred mode of the present invention, the proportion of the area of an opaque part in the second dark concealment region to the entire area of the second dark concealment region is 1 to 99%, preferably 10 to 90%, more preferably 30 to 80%, and particularly preferably 30 to 70%. The second dark concealment region achieves the function of preventing a change in transmittance from being abruptly made at the boundary between the first dark concealment region entirely formed of an opaque material and a transparent region in a central portion of the antifogging glass. When the proportion of the area of the opaque part to the entire area of the second dark concealment region is set in any one of the above-mentioned ranges, it is convenient for the appearance, the exterior sight by a driver or the like, and so on.

The size of a dot in the dot pattern (circular pattern) formed in the second dark concealment region 5 may be properly set. For example, the size is preferably 0.001 to 10 mm in diameter. The dots in the dot pattern may be formed such that the sizes of the dots or the distance between adjacent dots change along the width direction of the second dark concealment region. For example, when the sizes of the dots decrease or the distance between adjacent dots increases toward a central portion of the antifogging glass (toward the inner peripheral direction), the proportion of the area of the transparent part increases toward the central portion of the antifogging glass. The dot pattern may be formed such that the dots are transparent while the other part is opaque.

The opaque part in the second dark concealment region may have any pattern, which is determined, taking appearance into account. In other words, the transparent parts may be formed in a different shape from dots. For example, the transparent parts may be formed in an ellipsoidal shape, a rectangular shape, a polygonal shape, a star shape or another shape. The transparent parts may be formed in any pattern, such as a stripe pattern of parallel lines, a wave pattern, a bull's-eye pattern, a lattice pattern, a checkered pattern, or an annular pattern.

In a preferred mode of the present invention, when the second dark concealment region 5 on the antifogging glass is divided into small segments by properly setting dots in any one of the above-mentioned patterns, the antifogging glass is configured such that the proportion of the area of an opaque part to the entire area of the glass sheet surface in each segment increases toward the first dark concealment region 4. By configuring the antifogging glass as just described above, the antifogging glass has transparency gradually increasing in the second dark concealment region 5 from the first dark concealment region 4 toward the transparent region in the central portion of the antifogging glass, thus having better appearance and exterior sight.

In the defogging glass according to the present invention, it is preferred that the edge 6 of the defogging film be present in the second dark concealment region 5. In the mode shown in Fig. 4, the edge 6 of the defogging film is positioned at substantially the center of the width of the second dark concealment region 5. When the second dark concealment region is divided into small segments as described above, it is preferred that the edge 6 of the defogging film 3 be present in small segments where the proportion of the area of an opaque part is 30 to 80% (preferably 30 to 70%, more preferably 40 to 60%).

From another point of view, it is desired that the edge 6 of the antifogging film be present within a range having a width of 0.3 mm or more, preferably 0.3 to 3 mm from an inner peripheral edge of the second dark concealment region toward the outer peripheral direction in the second dark concealment region.

The second dark concealment region 5 normally has a width of about 0.5 to 100 mm, preferably about 1 to 50 mm, more preferably about 2 to 30 mm in many cases. Accordingly, when the desired position of the edge 6 of the antifogging film 3 meets any one of the modes, that position also meets all other modes in many cases. By setting the edge 6 of the antifogging film 3 at the above-mentioned position, the presence of the edge 6 of the antifogging film in a transparent region of the antifogging glass has no affection on the distortion in sight and reduces the degradation in appearance caused by a difference in gloss due to the presence and absence of the antifogging film in the dark concealment region.

Even in an antifogging glass having the edge 6 of the antifogging film 3 present in the first dark concealment region 4, the distortion in sight is prevented from being caused by the edge 6 of the antifogging film 3 disposed in a transparent region of the antifogging glass, and no problem is caused in exterior visibility, and the problem of adhesion to the flange of a window aperture in a vehicle is also solved. When the edge 6 of the antifogging film 3 is disposed to be present in the second dark concealment region 5, the visual effect on a driver or another person is further reduced, thus showing considerable improvement in ease in exterior sight, visual fatigue and the like.

At a lower side of an antifogging glass, the edge of the antifogging film tends to look like being distorted in comparison with the edges at the other sides of the antifogging glass since a person' sight line at a driver's seat is an acute angle with respect to the antifogging glass. From this point of view, the effect of the present invention is significantly remarkable in the lower side of an antifogging glass.

When the antifogging glass is produced, in a step for coating a liquid for antifogging coating on a glass sheet surface, a portion of the surface without the antifogging film disposed thereon is masked to prevent the coating liquid from adhering to that portion. When the edge of the antifogging film is disposed so as to be present in the second dark concealment region, the distortion in the edge of the antifogging film is made inconspicuous even if the position of the edge of the antifogging film slightly shifts from a desired position. In other words, it is not necessary to mask a desired portion with exact precision, thus making it possible to produce the antifogging glass simply and economically. When the edge 6 of the antifogging film 3 is set to be present in the vicinity of the center of the width of the second dark concealment region, even if the actual position of the edge is slightly shifted by a production error, the edge is prevented from being presented in the first dark concealment region or the transparent region, thus making it possible to produce the antifogging glass more simply and economically.

Although explanation has been made about a case where the dark concealment region is disposed at all four sides of a glass sheet, the antifogging glass according to the present invention is not necessarily formed with the dark concealment region at all four sides and may be formed with the dark concealment region at only one side.

Although the glass sheet 2 (glass sheet for a vehicle window) is shown as a single layer glass in Fig. 1 and Fig. 3 for simplification, the glass sheet for a vehicle window with the present invention applied thereto may be formed of a single layer glass or a laminated glass. The glass sheet with the present invention applied thereto may be formed of not only an inorganic glass sheet made of, e.g. soda-lime-silica glass but also a resin plate made of, e.g. polycarbonate, which is also called an organic glass. The glass sheet for a vehicle window with the present invention applied thereto may be formed in a flat shape or in a shape partly or entirely having a curvature. The glass sheet for a vehicle window normally has a thickness of 1 to 10 mm.

A second embodiment of the present invention is shown in Fig. 5. This embodiment is directed to a laminated glass, which includes an interior-side glass sheet, an exterior-side glass sheet, and an intermediate film disposed between both glass sheets. In Fig. 5, the exterior-side glass sheet is formed of a glass sheet 2a, and the interior-side glass sheet is formed of a glass sheet 2b.

It is preferred that the laminated glass be configured in any one of the following three modes.
Mode 1: A mode where the interior-side glass sheet has a dark concealment region formed as the above-mentioned dark concealment layer on an interior side thereof.
Mode 2: A mode where the interior-side glass sheet has a dark concealment region formed as the above-mentioned dark concealment layer on an exterior side thereof.
Mode 3: A mode where the exterior-side glass sheet has a dark concealment region formed as the above-mentioned dark concealment layer on an interior side thereof.

Fig. 5 is a view showing Mode 3. In Mode 3, the glass sheet 2a has a first dark concealment region 4 and a second dark concealment region 5 disposed on a side in contact with the intermediate film (on the interior side of the exterior-side glass sheet). The glass sheet 2b has an antifogging film 3 disposed on a side having no contact with the intermediate film (on the interior side of the interior-side glass sheet). Although a dark concealment layer cannot be disposed on the exterior side of the glass sheet 2a (on the side having no contact with the intermediate film) because of a problem of corrosion or the like, such a dark concealment layer may be disposed on the side of the glass sheet 2a in contact with the intermediate film as shown in Fig. 5. On the other hand, the antifogging film 3 needs to be disposed on the inner side (interior side) of the glass sheet 2b in order to achieve the antifogging effect. Although the antifogging film 3 does not directly cover the dark concealment material forming the second dark concealment region 5 in this case, there is no problem. Since the edge 6 of the antifogging film 3 looks like being present in the second dark concealment region 5 for a person, who sees an exterior scene through the antifogging glass, the image of the edge is observed without being distorted. In the embodiment shown in Fig. 5, even if a difference in gloss is produced with the edge 6 of the antifogging film 3 looking like a boundary since the antifogging film 3 does not directly cover the first dark concealment region 4 and the second dark concealment region 5, the difference is minor.

As in Mode 2, the first dark concealment region 4 and the second dark concealment region 5 may be disposed on a side of the glass sheet 2b in contact with the intermediate film (on the exterior side of the interior-side glass sheet). In this case as well, the antifogging effect is achieved without trouble. Even if a difference in gloss is produced with the edge 6 of the antifogging film 3 looking like a boundary since the antifogging film does not directly cover the dark concealment region, the difference is minor.

Mode 1 has an advantage of simplifying a production process, such as the conveyance of glass sheets, since the dark concealment region and the antifogging film are disposed on a single side of one of paired glass sheets.

The intermediate film in the present invention may be an intermediate film made of polyvinyl butyral or an intermediate film made of an ethylene-vinyl acetate copolymer. The intermediate film may have infrared-shielding fine particles dispersed therein. The infrared-shielding fine particles may be fine particles made of a metal of Sn, Ti, Si, Zn, Zr, Fe, Al, Cr, Co, Ce, In, Ni, Ag, Cu, Pt, Mn, Ta, W, V and Mo; an oxide, nitride or sulfide of such a metal; or a Sb- or F-doped compound of such a metal. Among these materials, it is preferred to use at least one of antimony-doped tin oxide (ATO) fine particles, ITO fine particles and zinc oxide fine particles. The use of ATO, ITO or zinc oxide fine particles can reduce the amount to be incorporated in the intermediate film since these materials are excellent in infrared-shielding properties. It is particularly preferred to use ITO fine particles as the infrared-shielding fine particles since ITO fine particles have an excellent infrared-shielding property.

These infrared-shielding fine particles have a particle size of 0.2 µm or less, preferably 0.001 to 0.15 µm. When ITO fine particles are used, the proportion of the amount of the fine particles having a particle size of 40 nm or more is preferably 10 mass% or less. The proportion of the amount of infrared-shielding fine particles dispersed into the intermediate film is preferably 0.1 to 1 mass part, more preferably 0.1 to 0.5 mass part, with respect to 100 mass part as the entire mass of the intermediate film. When ITO fine particles are used, the proportion of the amount of the fine particle is preferably 0.2 to 0.3 mass% with respect to the entire mass of the intermediate film.

The intermediate film may be obtained by, e.g. the following preparation method. First, infrared-shielding fine particles are dispersed in a plasticizer for the intermediate film. Then, the plasticizer having the infrared-shielding fine particles dispersed therein is added and dispersed in a resin solution for the intermediate film, followed by being mixed and kneaded to obtain a resin material for the film. Then, the resin material is formed into a film by, e.g. an extrusion molding to obtain an intermediate film having the infrared-shielding fine particles dispersed therein. At the time of adding and dispersing the plasticizer, other various additives may be added to the resin solution for the intermediate film. Such additives may, for example, be various pigments, organic ultraviolet absorbers or organic infrared absorbers. Further, as such plasticizer or solvent for the resin solution for the intermediate film, a known one may be used.

There is no limitation to the antifogging film used in the antifogging glass according to the present invention. Any kinds of antifogging films, which are normally used for an antifogging glass, are applicable.

The antifogging films are broadly classified into absorbent antifogging films and hydrophilic antifogging films. The absorbent antifogging films suppress the formation of water droplets thereon by holing condensed water therein. On the other hand, the hydrophilic antifogging films suppress the formation of water droplets by having film surfaces uniformly wetted with condensed water.

It is preferred that the antifogging film in the present invention be an absorbent antifogging film. Since the hydrophilic antifogging films have the film surface uniformly wetted to produce a water film, perspective distortion is caused in some cases. If water droplets have adhered to an antifogging film, some of the water droplets may remain on the glass sheet, thus affecting exterior sight. Water droplets may flow down and stay in a vicinity of a lower side of the glass sheet. From these points of view, it is preferred that the antifogging film be an absorbent antifogging film. The absorbent antifogging films have an excellent antifogging property and are also excellent in the durability to water. However, it is necessary to increase the thickness of the antifogging film in order to absorb a large amount of moisture since there is a limit to the amount of water absorption. From this point of view, the absorbent antifogging film in the present invention normally has a thickness of 1 µm to tens µm in many cases, preferably 5 to 50 µm, more preferably 5 to 30 µm, and particularly preferably 10 to 30 µm.

Such an absorbent antifogging film is preferably formed of an antifogging material containing a resin. Specifically, such an absorbent antifogging film is preferably formed of an absorbent resin having a hydrophilic functional group, more preferably an epoxy, acetal, urethane, or acrylic absorbent resin or the like, which has an ether group, a urethane bond or the like as the hydrophilic group. The antifogging film formed of such an absorbent resin may be disposed by a method of applying an absorbent resin in liquid or paste form on a glass sheet, by a method of applying a solution of an absorbent resin in a solvent on a glass sheet and removing the solvent, or a method of applying a solution of a precursor of an absorbent resin in a solvent on a glass sheet, removing the solvent, and curing the precursor by polymerization reaction, cross-linking reaction etc. thus forming the absorbent resin on the glass sheet.

It is supposed that such an absorbent resin holds moisture in a network structure produced by a cross-linking reaction or the like or attracts water to a hydrophilic group contained in the resin to hold condensed water in the antifogging film, thus achieving the antifogging effect.

The effect of the present invention is easily achieved particularly in a case where the present invention is applied to an absorbent antifogging film having a relatively large film thickness, particularly an absorbent antifogging film made of an antifogging material containing a resin. That is because such an absorbent antifogging film is noticeable at the edge thereof. When the present invention is applied to an absorbent antifogging film, the effect of the present invention is easily achieved since the antifogging film is restrained from peeling. In other words, when the edge of an antifogging film is present in a transparent region of a glass sheet, a portion of the glass sheet surface is exposed. The exposed portion is likely to be fogged because of having no antifogging film thereon. In such a case, the antifogging film is likely to swell and peel easily since an end portion of the antifogging film frequently has contact with moisture. In accordance with the present invention, it is possible to restrain the end portion of the antifogging film from swelling due to moisture and peeling by locating the edge of the antifogging film in the dark concealment region.

In a case where the antifogging film is formed of another antifogging material, (for example, the antifogging film has a small film thickness as described later or does not make the surface of the dark concealment layer glossy), although it is theoretically expected that the edge of the antifogging film is not noticeable, the edge of the antifogging film is likely to be noticeable in practice due to contamination or the like. The antifogging glass for a vehicle window according to the present invention can achieve an improved effect in appearance or visibility in connection with antifogging films, which are formed of various kinds of antifogging materials.

The absorbent antifogging film may improve its absorption effect by addition of a surface active agent. The absorbent antifogging film may have an inorganic protective film disposed so as to have such a small thickness that the absorption of the resin film is disturbed. In order to improve the adhesion between the glass sheet and the antifogging film, it is preferred to add a coupling agent to a liquid for antifogging coating or preliminarily treat the surface of the glass sheet with a coupling agent.

Specific examples of the absorbent antifogging film include an antifogging film made of a polyvinyl acetal resin having an acetalization degree of 2 to 40 mol%, an antifogging film having a water-soluble resin layer coated with a polyvinyl acetal resin having an acetalization degree of 2 to 40 mol%, an antifogging film prepared by polycondensing polyvinyl alcohol and tetramethoxysilane by use of hydrochloric acid as a catalyst, an antifogging film having a first layer containing hydrophilic inorganic fine particles and a coupling agent and a second layer formed of a hydrophilic resin and a surface active agent, an antifogging film having a porous film disposed on an absorbent polymer layer made of a polyacrylic acid or polyvinyl alcohol, a water-permeable antifogging film prepared by forming an absorbent composite film made of a polyvinyl acetal resin and silyl isocyanate or its partial hydrolyzate and forming, on the absorbent composite film, a water-repellent protective layer of a silica compound having a thickness of 10 nm or less, and an antifogging film prepared by laminating an absorbent composite film and an absorbent protective film having a film thickness of 3 to 10 nm, the absorbent composite film containing a polyvinyl acetal resin having an acetalization degree of 10 mol% or less and silyl isocyanate.

An example of the material for forming a hydrophilic antifogging film is a surface active agent.
The surface active agent is preferably formed of a neutral surface-active agent, for example a water-soluble polymer, such as polyacrylic acid and polyvinyl alcohol. When a surface active agent is applied to the surface of a substrate, the agent reduces the contact angle of water droplets to the surface of the material to disturb the formation of water droplets.

Some hydrophilic antifogging films are formed of an inorganic material. For example, a titania thin film having an anatase type crystal structure with a photocatalytic function exhibits a hydrophilic property, being exposed by light, to reduce the contact angle of water droplets to the surface of a transparent substrate. An antifogging film having a thin film made of silica or alumina is also applicable.

In an embodiment of the method for producing the antifogging glass according to the present invention, the peripheral edge portion of the exterior side of a glass sheet is coated with a black baking ceramic paint in the above-mentioned width to form the dark concealment region. The ceramic paint is preferably applied on the surface of the glass sheet by screen printing.

It is preferred that the dot pattern forming the second dark concealment region be formed of dots, the sizes of which are larger in a portion close to the first dark concealment region and gradually decrease with distance from the first dark concealment region as shown in Fig. 7. This arrangement has an excellent appearance and reduce the proportion of the area of the transparent part since the small segments closer to the first dark concealment region have a larger portion of the area of the opaque dot part. In this embodiment shown in this figure, the proportion of the area of the opaque part in the small segments of the second dark concealment region close to the first dark concealment region is about 80%, and the proportion of the area of the opaque part of the small segments of the second dark concealment region farthest from the first dark concealment region is about 30%. The number of the dots in the width direction may be properly determined according to the width of the second dark concealment region and the sizes of the dots. It is normal that the dots have a size (diameter) of about 0.1 to 10 mm, and that about 3 to 10 dots are disposed in a line in width direction. The dots may be disposed in an irregular pattern, taking appearance into account. Although the dark concealment layer is dull and black in many cases, any colors, such as gloss-reduced gray, navy blue or dark brown, which do not disturb exterior sight. The width or the shape of the first dark concealment region or the second dark concealment region may be determined based on the appearance of a window glass, external sight through the transparent part, and another factor.

Next, the liquid for antifogging coating is applied to the glass sheet with the first dark concealment region and the second dark concealment region disposed thereon, and the liquid is subjected to heating or photoirradiation as required, thus forming an antifogging film. The antifogging film may be formed of any one of the above-mentioned antifogging films. What is important is that the liquid for antifogging coating is applied such that the edge of the antifogging film is positioned within the dark concealment region.

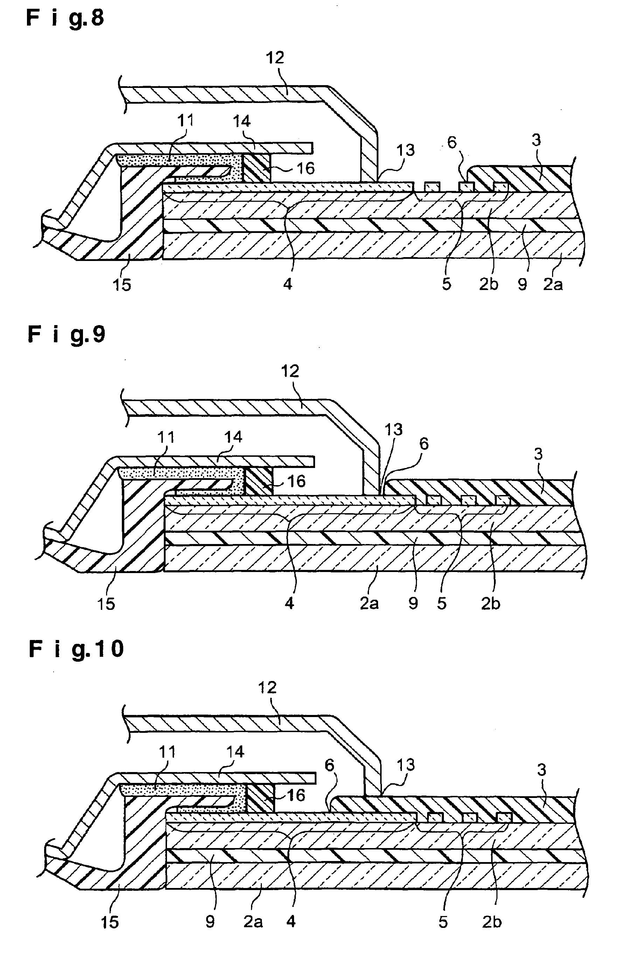

The antifogging glass for a vehicle window according to the present invention is assembled to the flange 14 of a window aperture in a vehicle and has the peripheral edge portion on the interior side covered with an interior material 12, thus providing a fixing structure for the vehicle window, as shown in Fig. 8 to Fig. 10. The fixing structure for a vehicle window is classified into the following three modes based on where the edge of the antifogging film is present.
(A) A mode where the edge 6 of the antifogging film 3 is present in the second dark concealment region 5, and the interior material 12 has an edge 13 present in the first dark concealment region 4 as shown in Fig. 8.
(B) A mode where the edge 6 of the antifogging film 3 is present in the first dark concealment region 3, the edge 13 of the interior material 12 is also present in the first dark concealment region 4, and the edge of the antifogging film 3 is present at a position inside the edge 13 of the interior material 12 in the inner peripheral direction as shown in Fig. 9.
(C) A mode where the edge 6 of the antifogging film 3 is present in the first dark concealment region 4, and the antifogging film is partly covered with the edge 13 of the interior material 12 as shown in Fig. 10.

In each of these three modes, the antifogging film 3 does not extend to the edge of the glass sheet, and the surface of the glass sheet or the surface of the dark concealment region has direct contact with the adhesive at the bonded portion of the outermost peripheral portion of the glass sheet with the flange of a window aperture in a vehicle. Thus, the antifogging glass and the flange have a good adhesion. The antifogging film 3 has a no problem of perspective distortion or the like since the edge 6 of the antifogging film is present in the first or second dark concealment region but not in a region of the antifogging glass for exterior sight.

Modes A and B are particularly effective when the antifogging film is formed of an absorbent film, since the edge of the antifogging film is present at a position inside the interior material in the inner peripheral direction of the antifogging glass surface. Such an absorbent antifogging film absorbs moisture in the air in the vehicle and holds the adsorbed moisture in the film, thus avoiding dew condensation on the glass surface, when the interior of the vehicle is under a high humidity. When the air in the vehicle has a low humidity, the film discharge absorbed moisture in the air. When the antifogging film has absorbed moisture, the moisture is likely to stay particularly in an end portion of the antifogging film. If the end portion of the antifogging film has been left, keeping moisture therein, the end portion of the antifogging film is likely to peel since the adhesion to the glass sheet decreases. In this regard, modes A and B are preferred since the end portion of the antifogging film is exposed, causing the end portion of the antifogging film to release moisture.

Mode A is the most preferred mode since the antifogging film has a high adhesion to the glass sheet surface and since there is no problem of a degradation in appearance and a decrease in exterior sight, which is caused by the occurrence of gloss in the first dark concealment region. In the absorbent antifogging film, which is made of an antifogging material containing any one of the above-mentioned resin materials, silanol groups on the glass surface are likely to be bonded with functional groups in the antifogging material, such as hydroxyl groups, amino groups or carboxyl groups, achieving a firm adhesion to the glass sheet surface. On the other hand, the opaque part of the dark concealment region has a poor adhesion to the antifogging film in comparison with the glass sheet surface in some cases. However, mode A has the most excellent adhesion and durability since there is a portion where the antifogging film is directly bonded to the surface of the glass substrate. Mode A is also excellent in terms of appearance since a change in gloss, which is observed with the edge of the antifogging film serving as a boundary, is made inconspicuous in the second dark concealment region in comparison with in the first dark concealment region as described above.

Although explanation of the fixing structure for a laminated glass has been made in reference to Figs. 8 to 10, the fixing structure according to the present invention is applicable not only to a laminated glass but also to a case where a single layer glass is fixed to a vehicle. The antifogging glass and the laminated glass for a vehicle window according to the present invention are applicable to not only a windshield but also a backlite, a side window glass or the like. The antifogging glass according to the present invention is applicable to not only a vehicle but also a window of a building, a window of a ship, a window of an airplane or other portions required for exterior sight therethrough, such as a window glass.

### INDUSTRIAL APPLICABILITY

The antifogging glass and the laminated glass for a vehicle window according to the present invention are applicable to not only a windshield but also a backlite, a side window glass or the like.

The entire disclosure of Japanese Patent Application No. 2006-327412 filed on December 4, 2006 including specification, claims, drawings and summary is incorporated herein by reference in its entirety.

## Claims

1. An antifogging glass for a vehicle window, comprising a glass sheet for a vehicle window and an antifogging film disposed on an interior side of the glass sheet, the glass sheet having a dark concealment region disposed in a band-shape on a peripheral edge portion thereof, and the antifogging film having an edge present in a position closer to a central portion of the glass sheet than an edge of the glass sheet and in the dark concealment region.

2. The antifogging glass for a vehicle window according to Claim 1, wherein the glass sheet for a vehicle window is formed of a single layer glass, and the single layer glass has a dark concealment layer disposed on the peripheral edge portion of the interior side thereof to form the dark concealment region.

3. The antifogging glass for a vehicle window according to Claim 1, wherein the glass sheet is formed of a laminated glass including an interior-side glass sheet, an exterior-side glass sheet and an intermediate film disposed between both glass sheets, and the interior-side glass sheet has a dark concealment layer disposed on the interior side thereof to form the dark concealment region.

4. The antifogging glass for a vehicle window according to any one of Claims 1 to 3, wherein the edge of the antifogging film is present in a region apart from an edge of the glass sheet toward an inner peripheral direction by a distance of 1/3 or more of the width of the dark concealment region disposed in a band-shape.

5. The antifogging glass for a vehicle window according to any one of Claims 1 to 4, comprising the glass sheet for a vehicle window and the antifogging film disposed on the interior side of the glass sheet, the glass sheet having a first dark concealment region disposed on the peripheral edge portion thereof, and the first dark concealment region having a second dark concealment region disposed on an inner peripheral edge portion of the first dark concealment region, the second dark concealment region having a lower degree of concealment than the first concealment region, and the edge of the antifogging film being present in the second concealment region.

6. The antifogging glass for a vehicle window according to Claim 5, wherein a proportion of an area of an opaque part in the second dark concealment region to an entire area of the second dark concealment region is 1 to 99%.

7. The antifogging glass for a vehicle window according to Claim 5 or 6, wherein a proportion of the area of an opaque part in the second dark concealment region increases toward the first dark concealment region.

8. The antifogging glass for a vehicle window according to any one of Claims 5 to 7, wherein the opaque part in the second dark concealment region is formed of a dot pattern.

9. The antifogging glass for a vehicle window according to any one of Claims 5 to 8, wherein the edge of the antifogging film is present in a region where a proportion of the area of the opaque part in the second dark concealment region is 30 to 80%.

10. The antifogging glass for a vehicle window according to any one of Claims 5 to 9, wherein a proportion of the area of an opaque part in the second dark concealment region is 30 to 80%.

11. The antifogging glass for a vehicle window according to any one of Claims 1 to 10, wherein the antifogging film is a film formed of an antifogging material containing a resin.

12. The antifogging glass for a vehicle window according to any one of Claims 1 to 11, wherein the antifogging film has a film thickness of 5 to 50 µm.

13. A fixing structure for an antifogging glass for a vehicle window, which is adapted to fix an antifogging glass for a vehicle window to the flange of a window aperture in the vehicle through an adhesive, the antifogging glass having a dark concealment region disposed in a band-shape on a peripheral edge portion thereof and an antifogging film disposed on an interior side thereof, the fixing portion being covered with an interior material, the antifogging film having an edge in a position present in the dark conceal region and being not covered with an interior material.

14. The fixing structure for an antifogging glass for a vehicle window according to Claim 13, wherein the glass sheet has a first dark concealment region disposed on the peripheral edge portion thereof, and the first dark concealment region has a second dark concealment region disposed on an inner peripheral edge portion of the first dark concealment region, the second dark concealment region having a lower degree of concealment than the first concealment region, and the edge of the antifogging film is present in the second concealment region.

15. A method for producing an antifogging glass according to any one of Claims 1 to 12, comprising disposing a dark concealment region in the peripheral edge portion of the interior side of the glass sheet, and disposing the antifogging film so as to position the edge of the antifogging film in the dark concealment region.
